# EUROPÄISCHE PATENTSCHRIFT

(11) **EP 0 468 375 B1**
(45) Veröffentlichungstag und Bekanntmachung des Hinweises auf die Patenterteilung: **23.10.1996**
(21) Anmeldenummer: 91112076.4
(22) Anmeldetag: 19.07.1991
(51) Int. Cl.: C08J 11/06, C08J 3/03

(54) **Verfahren zur Wiedergewinnung von in wässrig alkalischem oder saurem Milieu auflösbaren Polymeren**
Process for recovery of aqueous base or acid soluble polymers
Procédé de récupération de polymères solubles en milieu aqueux acide ou alcalin

(30) Priorität: 27.07.1990 DE 4023910
(43) Veröffentlichungstag der Anmeldung: 29.01.1992
(73) Patentinhaber: BELLAND AG, 4562 Biberist (CH)
(72) Erfinder: Gass, Michael, Dr., CH-4600 Olten (CH)
(74) Vertreter: Patentanwälte Ruff, Beier, Schöndorf und Mütschele

(56) Entgegenhaltungen:
- EP-A- 0 314 156
- EP-A- 0 316 676
- EP-A- 0 320 757
- US-A- 4 366 272
- WORLD PATENTS INDEX LATEST Week 3383, Derwent Publications Ltd., London, GB; AN 83-740253

## Beschreibung

Die Erfindung betrifft ein Verfahren zur Wiedergewinnung von in wässrig alkalischem oder saurem Milieu auflösbaren Polymeren durch Auflösen der Polymere und Ausfällen mit sauren bzw. alkalischen Fällungsreagentien. Zur Vermeidung von Abfall, zur Umweltschonung und zur Rückgewinnung wiederverwertbarer Stoffe wurde vorgeschlagen, Verpackungsmaterialien, Behälter für Lebensmittel, Essgeschirr, wie Partygeschirr, Etiketten, insbesondere auf Flaschen und Flaschenkästen, aus Kunststoffen herzustellen, die bei neutralen pH-Werten und bei vom neutralen pH-Wert abweichenden Gebrauchsbedingungen wasserfest bzw. unlösbar sind, aber in entgegengesetztem pH-Bereich auflösbar sind. So sind in der DE-OS 37 38 786 Etiketten aus in wässrig alkalischem Milieu auflösbaren Polymeren beschrieben. In den DE-OS 34 35 468 und DE-OS 33 35 954 ist die Herstellung und die weitere Verwendung ähnlicher Polymere beschrieben. Aus der DE-OS 37 42 472 ist die Herstellung und Verwendung von alkalische Gruppen aufweisenden in wässrig saurem Milieu auflösbaren und durch Zugabe von Alkali wieder ausfällbaren Kunststoffen und deren Anwendung beschrieben.

Bei den bisherigen Ausfällungsverfahren, die in herkömmlichen Reaktionsgefäßen, wie Rührkesseln oder Kolben, durchgeführt werden, erhält man in der Regel kompakte Ausfällungsprodukte in schwamm- oder kuchenartiger Form. Diese amorphen Produkte lassen sich nur schwer aufarbeiten, z.B. durch Pressen. Sie sind ohne vorherige Vorbehandlung nicht zufriedenstellend granulierbar.

Der Erfindung liegt die Aufgabe zugrunde, die Wiederaufbereitung von gelösten Polymeren zu leicht verarbeitbaren, insbesondere körnigen Produkten, zu ermöglichen.

Diese Aufgabe wird gelöst durch die Merkmale des Anspruchs 1.

Die Polymerlösungen werden insbesondere durch Auflösen von Kunststoffabfällen, insbesondere solchen, die mit nicht lösbaren Produkten oder anderen Kunststoffen vermengt sind, in Basen bzw. Säuren hergestellt, und ggf. von festen Begleitstoffen abgetrennt, insbesondere abzentrifugiert.

Durch eine schnelle innige Vermischung von Polymerlösung und Fällungsreagens in turbulenter Strömung wird eine Vielzahl von Polymerpartikeln gebildet. Die Vermischung kann je nach Art der Mischeinrichtung innerhalb einer Zeitdauer von 0,1 bis 2 Sekunden vorgenommen werden. Durch eine rasche Umwandlung der turbulenten Strömung in eine vorzugsweise laminare Reifeströmung wird verhindert, daß sich die Teilchen durch Aneinanderwachsen vergrößern. Durch getrennte Reifung der Teilchen wird erreicht, daß die Teilchen im wesentlichen ungehindert von ihrem ursprünglich klebrigen Zustand in einen nicht mehr klebrigen Reifezustand übergehen, so daß sie ohne Verklumpungsgefahr weiterverarbeitet werden können. Ein zusätzlicher Vorteil der Erfindung ist darin zu sehen, daß ohne Zusatz von Hilfsmitteln, insbesondere ohne Zusatz von oberflächenaktiven Substanzen, phosphorhaltigen Tensiden oder Emulgatoren sowie ohne Zusatz von Lösungsmitteln gearbeitet werden kann. Es werden trotzdem gut verarbeitbare Coagulate erhalten, die frei von zusätzlichen Begleitstoffen sind, wodurch ihre Wiederverwertbarkeit und Umweltfreundlichkeit verbessert wird. Die schnelle turbulente Vermischung findet vorzugsweise innerhalb einer Mischdauer von 0,1 bis 2,0 Sek. statt, wobei eine Mischdauer von 0,8 bis 1,0 Sek. bevorzugt ist. Die Reynolds-Zahl der Turbulenz liegt über 2000. Um eine schnelle Vermischung zu erreichen, wird das Fällungsreagens vorzugsweise in Form einer Flüssigkeit bzw. Lösung zugegeben. Das Verhältnis der Volumenströme von Polymerlösung zu Fällungsreagens ist unkritisch und liegt vorzugsweise bei einem Verhältnis von 6 - 8 zu 1, insbesondere ca. 7 zu 1. Die Fällung kann bei Normaltemperatur durchgeführt werden. Eine Temperatur im Bereich von 20 bis 25°C ist bevorzugt. Die turbulente Vermischung erfolgt vorzugsweise mit Hilfe einer Pumpe, in der die Polymerlösung und das Fällungsreagens zusammengeführt werden. Es ist jedoch auch möglich, die Volumenströme von Polymerlösung und Fällungsreagens getrennt unter Druck zu setzen und unter Druckentlastung zusammenzuleiten und miteinander zu vermischen, beispielsweise mit Hilfe eines statischen Mischers. Als Mischpumpe eignet sich beispielsweise eine Hochdruck-Kreiselpumpe.

Die Reifung wird, wie erwähnt, bei laminarer wässriger Strömung durchgeführt, um eine gegenseitige Berührung der Teilchen miteinander und damit ein Zusammenwachsen so weit wie möglich zu verhindern. Zur Erzielung einer laminaren Strömung können Beruhigungs- bzw. Leiteinrichtungen und Querschnittsvergrößerungen vorgesehen sein. Zur Aufrechterhaltung der laminaren Strömung sind vorzugsweise Strömungsrohre vorgesehen, insbesondere solche, die einen Innenquerschnitt von 4 bis 9, vorzugsweise 5,5 bis 8 cm² haben. Die Reaktionsrohre und sonstige Leiteinrichtungen bestehen vorzugsweise aus einem Material, das schlechte Hafteigenschaften gegenüber den frisch ausgefällten Polymeren besitzt, um ein Anbacken zu vermeiden. Hierzu eignen sich Polyethylen und Polystyrol. Die Länge der Strömungsrohre hängt von der Strömungsgeschwindigkeit und der Reifedauer ab. Die Reifedauer von 2 bis 4, insbesondere 2,5 bis 3 min. reicht in der Regel aus. Die Strömungsgeschwindigkeiten der laminaren Strömung liegen vorzugsweise im Bereich von 5 x 10⁻⁵ bis 10⁻² m/s, insbesondere 5 x 10⁻⁴ bis 5 x 10⁻³ m/s. Es können mehrere im wesentlichen parallel angeordnete Rohre vorgesehen sein. Auch ist es möglich und bevorzugt, die Rohre wendelförmig zu gestalten, um die Baugröße gering zu halten. Die Längsachse der Rohre bzw. Wendeln ist vorzugsweise im wesentlichen vertikal gerichtet, was ebenfalls dazu beiträgt, ein Absetzen oder Anhaften der Polymere an den Wandungen zu vermeiden. Die Reynolds-Zahl der laminaren Strömung liegt unter 1000, vorzugsweise unter 100. Bei Werten von 0,5 bis 10 werden besonders gute Ergebnisse erzielt.

Es hat sich herausgestellt, daß sich die Polymere besonders günstig ausfällen lassen, wenn die Konzentration der Polymerlösung vor der Vereinigung mit dem Fällungsreagens bei 0,5 bis 15, vorzugsweise bei 3 bis 5 Gew.-% liegt. Abweichungen hiervon sind je nach Art des auszufällenden Polymers möglich. Die Verfahrensbedingungen können durch die verschiedenen Verfahrensparameter, insbesondere durch den Grad der Turbulenz und die Gestaltung der sich anschließenden laminaren Strömung so aufeinander abgestellt werden, daß die ausgefällten Partikel nach der Reifung eine Teilchengröße bzw. einen Teilchenquerschnitt von 1 bis 100 mm² besitzen. Es ist ohne Schwierigkeiten ein Durchsatz von 2000 bis 4000 l/h, normalerweise ca. 3000 l/h pro Pumpe bzw. Pumpeinrichtung möglich, wobei der Durchsatz im wesentlichen von der Leistung der Pumpe abhängt.

Im Anschluß an die Reifung erfolgt die Abtrennung der ausgefällten Polymerpartikel vom flüssigen Medium vorzugsweise im wesentlichen drucklos, insbesondere vollständig drucklos. Hierzu eignet sich ein Sieb, insbesondere ein Bogensieb, bei dem eine Vielzahl von Platten unter Ausbildung einer bogenförmig nach unten verlaufenden Siebfläche aneinandergelegt sind, das Filtrat zwischen den Platten hindurchlaufen kann und die Partikel der Bogenfläche entlang nach unten rutschen, wobei sie zunehmend entwässert werden. Durch das drucklose Abtrennen wird vermieden, daß die Partikel aneinander haften bleiben. Die erhaltenen Partikel können dann noch einen Feuchtigkeits- bzw. Wassergehalt von 50 bis 80 Gew.-% besitzen. Durch weiteres Entwässern, insbesondere durch vorsichtiges Abpressen können die Partikel weiter getrocknet werden, bis auf einen Wassergehalt von unter 50 Gew.-%. In dieser Form sind die Polymerpartikel bereits geeignet zur Weiterverarbeitung in einem Extruder, wobei zur weiteren Entwässerung vorzugsweise ein mit Entgasungseinrichtungen versehener Extruder verwendet wird. Aufgrund ihres feinteiligen aber nicht mehr klebenden Zustandes sind die Polymerteilchen zur unmittelbaren Beschickung des Extruders geeignet. Beim Aufschmelzen der Teilchen im Extruder entweicht das Wasser dampfförmig, so daß am Extruderende die Polymerschmelze in der gewünschten Querschnittsform austritt. Es ist weiterhin möglich, die Polymere im Extruder in üblicher Weise mit Zuschlägen, insbesondere Pigmenten, Stabilisatoren usw. zu versetzen, soweit dies erwünscht oder erforderlich ist. Im allgemeinen wird die Polymerschmelze zunächst in Form von Strängen aus dem Extruder ausgetragen und pelletisiert. Auf diese Weise ist eine Zwischenlagerung möglich oder, wenn gewünscht, eine Vermischung mit anderen Pellets bzw. Granulaten.

Die Art des Fällungsreagens hängt einerseits von der Art des auszufällenden Polymers und andererseits von der gewünschten Verfahrensführung ab. Zur Fällung von saure Gruppen, insbesondere Carboxylgruppen, enthaltenden Polymeren können anorganische Säuren, organische Säuren und/oder sauer reagierende Salze verwendet werden. Der pH-Wert beim Ausfällen liegt normalerweise unter 6, insbesondere zwischen 2 und 3. Als anorganische Säuren eignen sich Mineralsäuren, insbesondere Schwefelsäure und Phosphorsäure. Als sauer reagierendes Salz eignet sich insbesondere Aluminiumsulfat, wobei hier neben der pH-Verschiebung auch die Eigenschaft von Al³⁺ als Coagulationshilfsmittel zum Tragen kommt. Saure Aluminiumsalze sind dann bevorzugt, wenn der Verbleib von Aluminiumoxyhydrat im ausgefällten Polymer erwünscht ist. Die Filtratlösung kann mindestens zum Teil rückgeführt und wiederverwendet werden, wobei ggf. im Überschuß angereicherte Sulfat- bzw. Phosphationen von Zeit zu Zeit durch Ausfällung entfernt werden können.

Als Fällungsreagens eignen sich jedoch auch relativ starke organische Carbonsäuren, insbesondere biologisch abbaubare Carbonsäuren wie Milchsäure, Weinsäure, Apfelsäure und insbesondere Citronensäure. Diese organischen Säuren können in einfacher Weise einer biologischen Zersetzung, insbesondere einer Vergärung unterworfen werden, so daß sie umweltfreundlich entsorgt werden. Besonders bevorzugt sind diese organischen Säuren, wenn die Lösung der Polymeren vor ihrer Ausfällung einer bakteriellen Zersetzung zur Beseitigung von mitgeschleppten Verunreinigungen unterworfen wird. Bei einer solchen Ausführung kann das Filtrat der Polymerausfällung bis zur Eingangsseite der bakteriellen Zersetzung rückgeführt und zur Einstellung der Bedingungen der biologischen Vergärung und auch als Nahrungssubstrat für die Bakterien verwendet werden.

Als Polymere mit sauren Gruppen, insbesondere Carboxylgruppen eignen sich insbesondere Copolymere von neutralen Vinylmonomeren mit α, β ungesättigten Mono- und/oder Dicarbonsäuren und/oder Anhydriden der Carbonsäuren. Als Carbonsäuren kommen besonders Acrylsäure, Methacrylsäure, Crotonsäure, Itaconsäure und Maleinsäure in Betracht. Geeignete Vinylmonomere sind Alkylacrylate und Alkylmethacrylate, wobei solche mit 1 bis 8, insbesondere 1 bis 6 Kohlenstoffatomen in der Alkoholkomponente bevorzugt sind, weiterhin Styrol. Als Säuren sind Acrylsäure und Methacrylsäure bevorzugt. Die Polymere können auch in Form von Terpolymeren vorliegen, wobei das Termonomere vorzugsweise ein neutrales Vinylmonomer ist, das vom anderen neutralen Monomer verschieden ist. Solche Polymere sind bekannt und beispielsweise in den oben genannten DE-OS 33 35 954, DE-OS 34 35 468 und DE-OS 37 38 786 beschrieben. Dabei ist der Carboxylgruppengehalt in Abhängigkeit vom hydrophoben Charakter der neutralen Monomere vorzugsweise so eingestellt, daß die Polymere in neutralem und saurem Medium unlöslich und in alkalischem Medium über pH 8 bis 9 löslich und durch Ansäuern wieder ausfällbar sind.

Polymere, die in neutralem und basischem Medium unlöslich, aber in saurem Medium lösbar sind, umfassen Copolymere von Styrol mit Acrylaten sowie Copolymere von Styrol mit Methacrylaten oder Termonomere vom Typ Styrol/Acrylat/Acrylat oder Styrol/Methacrylat/Acrylat oder Styrol/Methacrylat/Methacrylat, die basische Gruppen, insbesondere Aminogruppen aufweisen. Hierzu gehören vorzugsweise Copolymere der oben genannten neutralen Vinylmonomeren mit Dialkylaminoalkylacrylaten bzw. -methacrylaten, wie sie beispielsweise in der DE-OS 37 42 472 beschrieben sind. Auch diese Polymere können in Form von Terpolymeren vorliegen. Diese Polymere können im Gegensatz zu den oben genannten Polymeren durch Zugabe von Säuren aufgelöst und durch alkalisch wirkende Fällungsreagentien aus den sauren Lösungen wieder ausgefällt werden. Der Verfahrensgang kann im übrigen in gleicher Weise wie vorbeschrieben durchgeführt werden.

Weitere Merkmale der Erfindung ergeben sich aus der nachfolgenden Beschreibung von bevorzugten Ausführungsformen in Verbindung mit der Zeichnung und den Unteransprüchen. Hierbei können die einzelnen Merkmale jeweils für sich alleine oder zu mehreren in Kombination miteinander bei einer Ausführungsform verwirklicht sein.

In der Zeichnung zeigen
- Fig. 1: ein Verfahrensschema zur Durchführung des erfindungsgemäßen Verfahrens gemäß einer Ausführungsform, ausgehend von verunreinigten Kunststoffabfällen bis zum gereinigten Kunststoff
- Fig. 2: ein Verfahrensschema zur Durchführung einer anderen Ausführungsform der Erfindung.

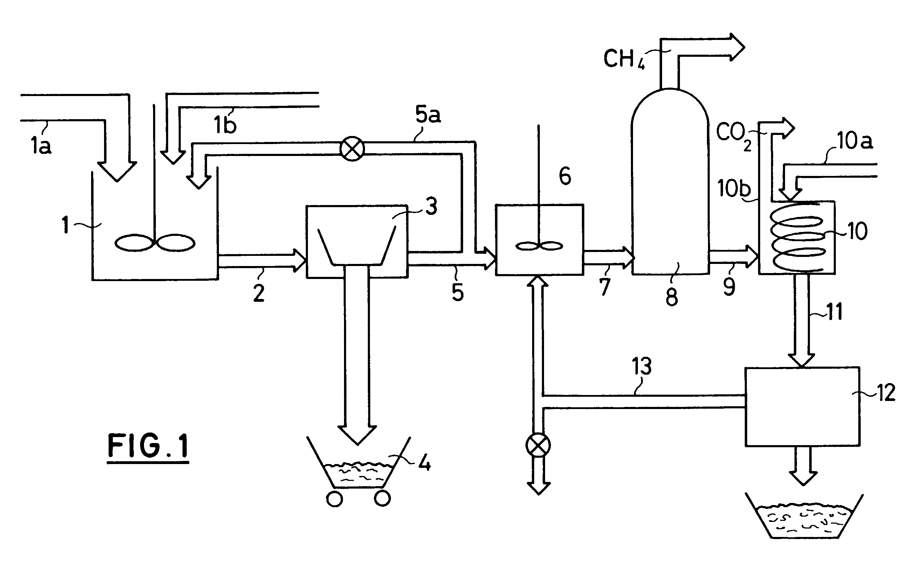

Die in Figur 1 dargestellte Verfahrensführung wird anhand eines Ausführungsbeispieles erläutert.

600 kg Müll aus einem Fastfood-Restaurant, welcher ca. 60 kg. gebrauchtes Kunststoff-Geschirr (Teller, Becher, Besteck) sowie 540 kg Speisereste sowie andere biologische und organische Substanzen wie Papier, Papierservietten, Zigarettenschachteln, Zigarettenstummel, Streichhölzer enthält, werden in einem in der Zeichnung nicht dargestellten Shredder zunächst grob zerkleinert und anschließend bei 1a in einen Stofflöser 1 geführt, dem gleichzeitig wässrige Natronlauge bei 1b zugeführt wird, die bezogen auf die Müllmenge, 25 kg NaOH enthält. Aufgrund der hohen Scherkräfte im Stofflöser findet während der Auflösung gleichzeitig eine mechanische Zerkleinerung statt, so daß den Stofflöser 1 durch eine Leitung 2 eine Suspension verläßt, die die gelösten Kunststoffe, gelöste organische Bestandteile sowie feinteiligen ungelösten Müll enthält. Diese Suspension wird in einer Dekanterzentrifuge 3 einer Fest/Flüssigtrennung unterworfen, die abgetrennten Feststoffe werden in einem Behälter 4 aufgefangen und können einer Kompostierung oder anderweitigen Verwertung zugeführt werden. Die wässrig alkalische Polymerlösung, die einen pH-Wert von 11 bis ca. 13 besitzt, kann, falls erwünscht, teilweise durch Leitung 5a zur Aufkonzentrierung des Polymermaterials in den Stofflöser 1 zurückgeführt werden. Gewöhnlich wird sie durch Leitung 5 in einen Pufferbehälter 6 geleitet, der eine mehrfache Funktion besitzt. Zum einen dient er dazu, die der nachgeschalteten bakteriellen Zersetzung zu unterwerfende Lösung durch Leitung 7 im wesentlichen kontinuierlich abfließen zu lassen, auch dann, wenn dem Stofflöser 1 der Müll diskontinuierlich zugeführt wird. Zum anderen dient der Pufferbehälter zur Einstellung des pH-Wertes und der Temperatur auf die für die bakterielle Zersetzung geeigneten Werte. Hierzu wird die Temperatur auf ca. 50°C eingestellt, um für die bei Temperaturen von 35 bis 40°C endotherm ablaufende bakterielle Zersetzung noch eine ausreichende Wärmemenge zum Ausgleich der Energiebilanz zur Verfügung zu haben. Der pH-Wert der wässrig alkalischen Lösung wird im Pufferbehälter 6 auf pH 8,5 bis 10,5 gesenkt, damit sich im Methanreaktor 8 ein für die anaerobe Gärung günstiger pH-Wert von ca. 8,5 einstellt. Diese Einstellung im Methanreaktor erfolgt aufgrund der weiteren pH-Absenkung durch Neutralisierung des vorhandenen Alkalis in Folge der CO₂-Bildung. Im Methanreaktor 8 wird unter anaeroben Bedingungen gearbeitet. Der Methanreaktor ist teilweise mit Füllkörpern angefüllt, wobei Zeolithgranulate bevorzugt sind. Auf diesen Füllkörpern sind Bakterienkulturen angewachsen, die den vergärbaren organischen Bestandteilen der Polymerlösung vorzugsweise angepaßt sind. Dies kann durch Initiierung der anaeroben Gärung mit Hilfe von Klärschlamm erreicht werden, der eine Vielzahl von verschiedenen Bakterienstämmen enthält, von denen sich dann bevorzugt diejenigen vermehren, die die vergärbaren organischen Bestandteile verarbeiten können. Das während der anaeroben Gärung entstehende Methan kann am oberen Ende des Methanreaktors abgezogen und einer weiteren Verwendung, beispielsweise zur Beheizung des Stofflösers, zugeführt werden. Der Methanreaktor 8 ist vorzugsweise temperierbar, insbesondere heizbar, um, falls notwendig, geeignete Temperatureinstellungen vornehmen zu können. Durch Leitung 9 verläßt den Methanreaktor eine gereinigte Polymerlösung, die außer dem Alkalisalz, insbesondere Natriumsalz, der Polymere im wesentlichen nur noch Natriumcarbonat bzw. -hydrogencarbonat enthält. Die ursprünglich mitgeführten bzw. durch Hydrolyse aufgelösten biologischen Verunreinigungen sind durch die anaerobe Gärung im wesentlichen vollständig entfernt. Falls erwünscht, kann im Bereich der Leitung 9 eine Sterilisierung der gereinigten Polymerlösung vorgenommen werden, um das Mitschleppen von Bakterien zu verhindern. Ferner ist an dieser Stelle eine Entfärbung der Lösung mit an sich bekannten Entfärbemitteln möglich. Falls erforderlich, kann hier auch eine zusätzliche Fest/Flüssigtrennung, beispielsweise durch Zentrifugieren, erfolgen. Die gereinigte Polymerlösung gelangt dann in eine Fällungskammer 10, in der sie mit dem Fällungsreagens, das bei 10a zugeführt wird, vermischt wird. Als Fällungsreagens wird bei dieser bevorzugten Ausführungsform eine im Methanreaktor biologisch abbaubare organische Säure verwendet, wobei Citronensäure als relativ starke Säure bevorzugt ist. Die Fällung in der Fällungskammer 10 findet unter turbulenten Bedingungen statt, unter denen die Kunststofflösung aus Leitung 9 und die Säure aus Leitung 10a innerhalb kurzer Zeitdauer, vorzugsweise 0,1 bis 2,0 Sek. innig miteinander vermischt werden. Dabei liegt der Volumenstrom von Polymerlösung zu Volumenstrom des Fällungsreagens vorzugsweise bei 6 zu 1 bis 8 zu 1. Bei der Ansäuerung entweicht bei 10b Kohlendioxid, das einer Wiederverwendung, z.B. zur Teilneutralisation im Pufferbehälter 6, zugeführt werden kann. Im wesentlichen unmittelbar anschließend an die turbulente Vermischung wird die wässrige Polymersuspension, die vorzugsweise einen pH-Wert von 2 bis 6,5 besitzt, in eine laminare Strömung überführt, um den feinteiligen Polymerpartikeln eine Reifezeit zu ermöglichen, während derer sie sich von dem ursprünglich klebrigen Zustand in einen festen, nicht mehr klebrigen Zustand umwandeln, ohne sich gegenseitig zu berühren. In der Regel reicht hierzu eine Reifedauer von 2 bis 4 min. aus. Die laminare Strömung wird durch Beruhigung des turbulenten Stromes, insbesondere durch eine starke Querschnittserweiterung, erreicht und kann in einem oder mehreren, ggf. parallelgeschalteten, Reaktions-, bzw. Reiferohren fortgeführt werden, die aus Platzgründen vorzugsweise wendelförmig ausgebildet sind. Dabei sind die Rohre vorzugsweise so angeordnet, daß die Achse der Rohre bzw. der Wendeln im wesentlichen vertikal verläuft. Die Strömungsgeschwindigkeit der laminaren Strömung liegt vorzugsweise im Bereich von 5 X 10⁻⁵ bis 10⁻² m/s insbesondere bei 5 X 10⁻⁴ bis 5 X 10⁻³ m/s. Die Reynolds-Zahl der laminaren Strömung liegt unter 1000, vorzugsweise unter 100, wobei Bereiche von 0,5 bis 10 besonders bevorzugt sind.

Im Anschluß an die laminare Reifung werden die Polymerteilchen von der Salzlösung der Fällungssäure abgetrennt, was vorzugsweise drucklos erfolgt, um ein noch mögliches Zusammenbacken der Polymerteilchen zu vermeiden. Die Fest/Flüssigtrennung erfolgt vorzugsweise mit Hilfe eines Siebes bzw. Filters, wobei ein Bogensieb bevorzugt ist. Die Polymere werden dann in Form von diskreten, noch stark wasserhaltigen (50 bis 80 Gew.-% Wasser) Polymerteilchen erhalten, die beispielsweise durch vorsichtiges Abpressen weiter entwässert werden können. Die Polymerteilchen sind rein genug, um sie ohne weitere Aufbereitung weiter verarbeiten zu können. Sie sind insbesondere zur Weiterverarbeitung in einem Extruder mit Entgasungseinrichtung geeignet, da sie in einer für die Beschickung eines Extruders geeigneten Größe vorliegen. Die restlichen Wassermengen werden durch die Entgasungseinrichtungen des Extruders entfernt.

Das aus dem Bogensieb 12 durch Leitung 13 ablaufende Filtrat wird mindestens teilweise in den Pufferbehälter 6 rückgeführt, wo es zur Abkühlung und pH-Einstellung der wässrig alkalischen Polymerlösung dient. Überschüssiges Filtrat kann abgelassen werden.

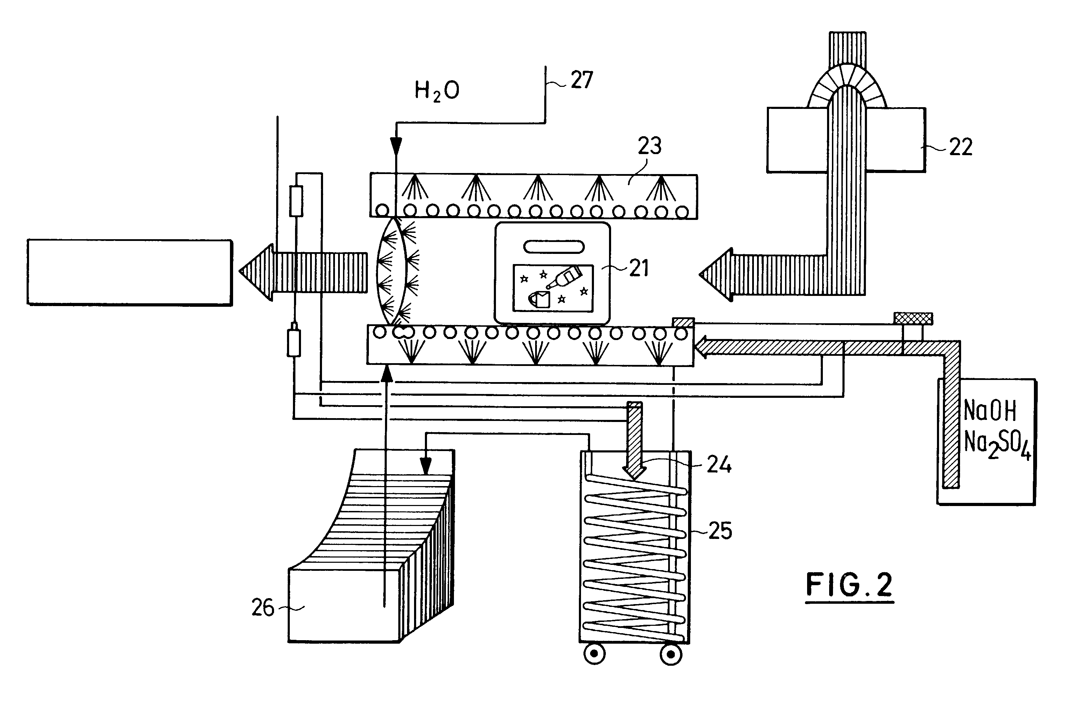

Figur 2 beschreibt den Verfahrensgang einer Waschanlage von mit ablösbaren Etiketten versehenen Gegenständen am Beispiel von Kästen für Bierflaschen.

Bierkästen sind in der Regel mit einer Beschriftung der das Bier herstellenden Brauerei versehen. Gemäß der DE-OS 37 38 786 ist vorgesehen, die Bierkästen mit einem Etikett zu versehen, das vollständig aus in alkalisch wässrigem Medium lösbaren Kunststoffen besteht. Wenn die Bierkästen stark verschmutzt sind und/oder mit einem neuen Etikett versehen werden sollen, werden sie in einer Waschanlage gereinigt und vom alten Etikett befreit. Hierzu ist eine automatische Waschanlage vorgesehen, die bei einem Wasserbedarf von 600 l/h 3.000 Bierkästen/h zu reinigen vermag. Die entleerten Bierkästen 21 werden zunächst durch eine schematisch dargestellte Vorspüleinrichtung 22 geführt, in der sie mit einem thixotrop eingestellten, Natriumhydroxid enthaltenden Reinigungsmittel eingesprüht werden, wonach sie in eine Waschanlage 23 gelangen, in der der angelöste Schmutz mitsamt den aufgelösten Etiketten abgespült wird. Das in der Waschanlage 23 aufgefangene alkalische, das gelöste Polymer der Etiketten enthaltende, Spülwasser wird bei 24 in einer nicht dargestellten Hochdruck-Kreiselpumpe unter turbulenter Vermischung mit Fällungsreagens Al₂(SO₄)₃, Schwefelsäure und/oder Phosphorsäure versetzt, wobei die Polymerteilchen feinteilig ausfallen. Die gebildete Suspension wird daraufhin in eine laminare Strömung überführt und durch ein bei 25 schematisch dargestelltes wendelförmiges Strömungsrohr in laminarer Strömung geleitet, bis die getrennt voneinander strömenden Polymerteilchen so weit verfestigt sind, daß sie nicht mehr miteinander verkleben. Nach erfolgter Reifung wird die Polymersuspension über ein Bogensieb 26 geführt, wobei die flüssige Phase als Filtrat gewonnen wird und die feste Phase entlang der bogenförmigen Siebfläche abrutscht und dort entnommen werden kann.

Das pulver- bzw. granulatförmige polymere Material kann wie oben beschrieben aufgearbeitet und einer Wiederverwendung zugeführt werden. Das Filtrat kann als Spülflüssigkeit rückgeführt werden, bis der Gehalt an Sulfat so weit angereichert ist, daß eine übliche Ausfällung, z.B. in Form von Gips oder Aluminiumoxyhydrat, vorgenommen wird.

Das Verfahren ist energie- und materialsparend durchführbar, der Wasserverbrauch ist mit ca. 200 g Frischwasser pro Bierkasten, das bei 27 zum Nachspülen zugeführt wird, gering.

Das Verfahren ist in ähnlicher Weise auch für andere Gegenstände, die mit Etiketten aus alkalilöslichen Polymeren bebildert bzw. beschriftet sind, anwendbar, insbesondere auch für Bierflaschen. Es ist auch möglich, die abzulösenden Schichten mehrschichtig aus verschiedenen Polymeren aufzubauen, die eine abgestufte Alkalilöslichkeit besitzen. Bei mehrstufiger Durchführung des Ablösevorganges ist somit eine fraktionierte Ablösung der einzelnen Schichten mit Waschmitteln mit abgestuft zunehmenden pH-Werten möglich. Werden die Waschlösungen getrennt aufgefangen, so ist eine getrennte Wiedergewinnung und Aufarbeitung der verschiedenen Polymere möglich.

## Patentansprüche

1. Verfahren zur Wiedergewinnung von in wässrig alkalischem oder saurem Milieu auflösbaren Polymeren durch Auflösen der Polymere und Ausfällen mit sauren bzw. alkalischen Fällungsreagentien, dadurch gekennzeichnet, daß die Ausfällung in einer starken wässrigen turbulenten Strömung mit einer Reynoldszahl über 2000 vorgenommen wird und die ausgefällten Partikel im wesentlichen getrennt voneinander einer Reifung in einer laminaren Strömung während einer Verweildauer von 2 bis 4 Minuten unterworfen werden und dann abgetrennt und entwässert werden.

2. Verfahren nach Anspruch 1, dadurch gekennzeichnet, daß die turbulente Vermischung mit Hilfe einer Kreiselpumpe durchgeführt wird.

3. Verfahren nach Anspruch 1 oder 2, dadurch gekennzeichnet, daß die Reifungsdauer 2,5 bis 3 min. beträgt.

4. Verfahren nach einem der vorhergehenden Ansprüche, dadurch gekennzeichnet, daß die Reifung unter laminarer Strömung in mindestens einem Reaktionsrohr, einer Anordnung von parallelen Rohren oder in mindestens einem Wendelrohr durchgeführt wird.

5. Verfahren nach einem der vorhergehenden Ansprüche, dadurch gekennzeichnet, daß die Überführung der turbulenten Strömung in die laminare Strömung durch eine Querschnittserweiterung und/oder mit Hilfe von Leiteinrichtungen vorgenommen wird.

6. Verfahren nach einem der vorhergehenden Ansprüche, dadurch gekennzeichnet, daß die ausgefällten Partikel vom flüssigen Medium im wesentlichen drucklos abgetrennt werden.

7. Verfahren nach Anspruch 6, dadurch gekennzeichnet, daß die ausgefällten Partikel völlig drucklos abgetrennt werden.

8. Verfahren nach einem der vorhergehenden Ansprüche, dadurch gekennzeichnet, daß die ausgefällten Partikel vom flüssigen Medium mit Hilfe eines Bogensiebes abgetrennt werden.

9. Verfahren nach einem der vorhergehenden Ansprüche, dadurch gekennzeichnet, daß die ausgefällten Partikel in Form von einen Wassergehalt von 50 bis 80 Gew.-% aufweisenden Teilchen abgetrennt werden.

10. Verfahren nach einem der vorhergehenden Ansprüche, dadurch gekennzeichnet, daß die abgetrennten Partikel auf einen Wassergehalt von weniger als 50 % vorgetrocknet werden.

11. Verfahren nach Anspruch 10, dadurch gekennzeichnet, daß die abgetrennten Partikel abgepreßt werden.

12. Verfahren nach einem der vorhergehenden Ansprüche, dadurch gekennzeichnet, daß die abgetrennten Partikel in einen Extruder mit Entgasungseinrichtungen gegeben und zu einem im wesentlichen wasserfreien Produkt verarbeitet werden.

13. Verfahren nach Anspruch 12, dadurch gekennzeichnet, daß die abgetrennten Partikel mit einem'Wassergehalt von weniger als 50 Gew.-% in den Extruder gegeben werden.

14. Verfahren nach Anspruch 12 oder 13, dadurch gekennzeichnet, daß die abgetrennten Partikel mit Hilfe des Extruders zu Pellets bzw. Granulaten verarbeitet werden.

## Claims

1. Process for the recovery of polymers dissolvable in aqueous alkaline or acid media by dissolving the polymers and precipitating with acid or alkaline precipitation reagents, characterized in that the precipitation is carried out in a strong, aqueous turbulent flow with a Raynolds number above 2000 and the precipitated particles undergo ripening substantially separate from one another in a laminar flow for a residence time of 2 to 4 minutes and are then separated and dewatered.

2. Process according to claim 1, characterized in that the turbulent mixing is carried out with the aid of a centrifugal pump.

3. Process according to claim 1 or 2, characterized in that the ripening time is 2.5 to 3 min.

4. Process according to one of the preceding claims, characterized in that ripening is carried out with a laminar flow in at least one reaction tube, an arrangement of parallel tubes or in at least one helical tube.

5. Process according to one of the preceding claims, characterized in that the conversion of the turbulent flow into a laminar flow is brought about by a cross-sectional widening and/or with the aid of deflecting means.

6. Process according to one of the preceding claims, characterized in that the precipitated particles are separated substantially in pressureless manner from the liquid medium.

7. Process according to claim 6, characterized in that the precipitated particles are separated in a completely pressureless manner.

8. Process according to one of the preceding claims, characterized in that the precipitated particles are separated from the liquid medium with the aid of an arcuate screen.

9. Process according to one of the preceding claims, characterized in that the precipitated particles are separated in the form of particles having a water content of 50 to 80% by weight.

10. Process according to one of the preceding claims, characterized in that the separated particles are predried to a water content of less than 50%.

11. Process according to claim 10, characterized in that the separated particles are squeezed.

12. Process according to one of the preceding claims, characterized in that the separated particles are fed into an extruder with degassing devices and are processed to a substantially anhydrous product.

13. Process according to claim 12, characterized in that the separated particles with a water content below 50% by weight are fed into the extruder.

14. Process according to claim 12 or 13, characterized in that the precipitated particles are processed to pellets or granules with the aid of the extruder.

## Revendications

1. Procédé pour la récupération de polymères solubles dans un milieu alcalin ou acide aqueux par dissolution des polymères et précipitation avec des réactifs de précipitation acides, respectivement alcalins, caractérisé en ce qu'on procède à la précipitation dans un courant turbulent aqueux rapide possédant un indice de Reynolds supérieur à 2000, et on soumet les particules précipitées essentiellement séparées l'une de l'autre à une maturation dans un courant laminaire pendant un temps de séjour de 2 à 4 minutes et ensuite, on les sépare et on les déshydrate.

2. Procédé selon la revendication 1, caractérisé en ce qu'on effectue le mélange turbulent à l'aide d'une pompe centrifuge.

3. Procédé selon la revendication 1 ou 2, caractérisé en ce que la durée de maturation s'élève de 2,5 à 3 minutes.

4. Procédé selon l'une quelconque des revendications précédentes, caractérisé en ce qu'on effectue la maturation sous forme d'un courant laminaire dans au moins un tube réactionnel, dans un agencement de tubes parallèles ou dans au moins un tube hélicoïdal.

5. Procédé selon l'une quelconque des revendications précédentes, caractérisé en ce qu'on procède à la transformation du courant turbulent en courant laminaire en utilisant un élargissement de la section transversale et/ou à l'aide de mécanismes de guidage.

6. Procédé selon l'une quelconque des revendications précédentes, caractérisé en ce qu'on sépare les particules précipitées du milieu liquide essentiellement sans pression.

7. Procédé selon la revendication 6, caractérisé en ce qu'on sépare les particules précipitées tout à fait sans pression.

8. Procédé selon l'une quelconque des revendications précédentes, caractérisé en ce qu'on sépare les particules précipitées du milieu liquide à l'aide d'un tamis arqué.

9. Procédé selon l'une quelconque des revendications précédentes, caractérisé en ce qu'on sépare les particules précipitées sous la forme de particules présentant une teneur en eau de 50 à 80% en poids.

10. Procédé selon l'une quelconque des revendications précédentes, caractérisé en ce qu'on soumet les particules séparées à un préséchage pour obtenir une teneur en eau inférieure à 50%.

11. Procédé selon la revendication 10, caractérisé en ce qu'on soumet les particules séparées à une extraction par pression.

12. Procédé selon l'une quelconque des revendications précédentes, caractérisé en ce qu'on introduit les particules séparées dans une extrudeuse munie de mécanismes de dégazage et on les soumet à un traitement pour obtenir un produit essentiellement anhydre.

13. Procédé selon la revendication 12, caractérisé en ce qu'on introduit les particules séparées dans l'extrudeuse tandis qu'elles possèdent une teneur en eau inférieure à 50% en poids.

14. Procédé selon la revendication 12 ou 13, caractérisé en ce qu'on traite les particules séparées à l'aide de l'extrudeuse pour obtenir des boulettes, respectivement des granulés.
